# EUROPÄISCHE PATENTSCHRIFT

(11) **EP 0 716 907 B1**
(45) Veröffentlichungstag und Bekanntmachung des Hinweises auf die Patenterteilung: **03.03.1999**
(21) Anmeldenummer: 95119522.1
(22) Anmeldetag: 12.12.1995
(51) Int. Cl.: B27L 7/00, F16P 3/20

(54) **Schutzeinrichtung für und an Arbeitsmaschinen mit sich bewegenden Trenn- und/oder Spaltwerkzeugen**
Safety device for, or on, machines with moving cutter and/or splitter tools
Dispositif de protection pour machines à outil mobile pour fendre le bois

(30) Priorität: 16.12.1994 AT 2350/94
(43) Veröffentlichungstag der Anmeldung: 19.06.1996
(73) Patentinhaber: Posch Gesellschaft m.b.H., 8430 Leibnitz/Kaindorf (AT)
(72) Erfinder: Herburger, Josef, A-6951 Lingenau (AT)
(74) Vertreter: Hefel, Herbert, Dipl.-Ing.

(56) Entgegenhaltungen:
- EP-A- 0 438 997
- EP-A- 0 600 841
- WO-A-86/06816
- US-A- 5 168 173

## Beschreibung

Die Erfindung bezieht sich auf eine Schutzeinrichtung für und an Arbeitsmaschinen mit sich bewegenden Trenn- und/oder Spaltwerkzeugen mit den Merkmalen des Oberbegriffes des Patentanspruches 1.

Arbeitsmaschinen der genannten Art werden häufig in landwirtschaftlichen und forstwirtschaftlichen Betrieben eingesetzt und oft von ungeschultem Personal benutzt. Die auf diesen Arbeitsmaschinen zu bearbeitenden Werkstücke werden in der Regel manuell in den unmittelbaren Bereich des sich bewegenden Trenn-oder Spaltwerkzeuges geführt, bzw. sind diese sich drehenden und bewegenden Werkzeuge mit der Hand unmittelbar erreichbar. Mangelnde Aufmerksamkeit, mangelnde Erfahrung und Ablenkung der Bedienungsperson führen dann zu schweren Handverletzungen, wenn die Hand in den Bereich des sich bewegenden Trenn-oder Spaltwerkzeuges gelangt. Ein Beispiel dafür sind Einrichtungen zum Spalten von Brennholz.

Einrichtungen dieser Art sind in vielen verschiedenen Ausführungsformen bekannt. Ihnen allen gemeinsam ist ein Auflagetisch, auf den das zu spaltende Holzstück aufgelegt wird und ein gegen diesen Auflagetisch verfahrbarer Spaltkeil, der an einem achsial verschiebbaren, sogenannten Spaltturm festgelegt ist und von diesem nach vorne auskragt. In diesem Spaltturm ist eine hydraulische Kolben-Zylinder-Einheit gelagert, die einerseits am Maschinengestell der Einrichtung und andererseits am Spaltturm festgelegt ist. Zur Beaufschlagung der doppelt wirkenden Kolben-Zylinder-Einheit ist eine motorisch angetriebene Ölpumpe vorgesehen sowie ein hydraulisches Steuerventil, das von der Bedienungsperson über einen Hebel willkürlich zu betätigen ist, in der Regel mit dem Fuß oder dem Knie. In seiner Ausgangslage befindet sich der Spaltkeil oberhalb des Auflagetisches. Die Bedienungsperson faßt mit beiden Händen einen Holzklotz, legt ihn auf den Auflagetisch und hält ihn vorerst mit beiden Händen seitlich fest. Dann wird der erwähnte Hebel mit dem Fuß oder Knie betätigt und dadurch fährt der Spaltkeil nach unten, wobei die Spaltkraft schon kleiner Einrichtungen dieser Art bis zu 6 t und mehr betragen kann. Wenngleich in den Bedienungsanleitungen für solche Einrichtungen nachdrücklich darauf hingewiesen wird, daß die zu spaltenden Holzstücke ausschließlich und nur seitlich mit den Händen gefaßt werden dürfen, um Verletzungen durch den niederfahrenden Spaltkeil zu vermeiden, führt die Arbeit mit solchen Einrichtungen immer wieder zu schweren Handverletzungen, wenn die Bedienungsperson den zu spaltenden Holzklotz oben faßt oder die Hand unter den Holzklotz schiebt, um ihn eventuell gegenüber dem Spaltkeil auszurichten und dabei den Bedienungsschalter auslöst.

Sicherheitsvorschriften, wie sie für Österreich seit 1. Januar 1995 verbindlich geworden sind, verbieten die weitere Herstellung und das Feilhalten solcher Holzspalter. Ausgehend von diesem Stand der Technik und unter Berücksichtigung dieser Vorschriften wurde eine Einrichtung der gegenständlichen Art weiterentwickelt, und diese Weiterentwicklung ist Inhalt der EU-PS 438 997 (= AT-PS 397 061). Zu beiden Seiten des Spaltturmes ist je ein schwenkbarer Hebel gelagert, jeder Hebel ist zusätzlich um seine Längsachse verdrehbar. An jedem dieser Hebel ist eine Halteplatte festgelegt. Mit den beiden Hebeln und den erwähnten Halteplatten soll nun das zu spaltende Holzstück festgehalten werden. Durch Drehen beider Hebel um ihre Längsachse wird der Antrieb für den Spaltkeil ausgelöst. Diese hier vorgesehene zweihändige Bedienung entspricht zwar den erwähnten Sicherheitsvorschriften, allerdings ist ein effizientes Arbeiten mit einer solchen Einrichtung nach der EU-PS 438 997 beschwerlich. Die zu spaltenden Holzstücke besitzen sehr unregelmäßige Formen. Jedes zu spaltende Holzstück müßte daher so vorbereitet sein, daß es so auf den Auflagetisch gestellt werden kann, daß es dort selbst seine Lage verläßlich beibehält. Dann müssen mit den beiden Hebeln die Halteplatten seitlich angelegt werden, wobei darauf geachtet werden muß, daß dies exakt synchron erfolgt, widrigenfalls das Holzstück umfällt. Diese Einrichtung wurde daher bereits verbessert, und zwar in der Weise, daß die Halteplatten und die Hebel als getrennte Bauteile ausgeführt sind, beide aber gleichzeitig manipuliert werden können.

Die Erfindung hat sich nun die Aufgabe gestellt, Arbeitsmaschinen der eingangs genannten Art so auszugestalten, daß Verletzungen vermieden werden können, und daß trotzdem die ursprüngliche Arbeitsweise soweit wie möglich beibehalten werden kann, wobei den vorgeschriebenen Sicherheitserfordernissen Rechnung getragen wird, was gemäß der Erfindung durch jene Maßnahmen gelingt, die Gegenstand und Inhalt des kennzeichnenden Teiles des Patentanspruches 1 sind. Bei den hier erfindungsgemäß vorgesehenen fotoelektrischen Reflexionsschaltern handelt es sich um eine, einen Lichtstrahl aussendende Baukomponente mit einem einge-bauten Empfangsteil, wobei der ausgesandte Lichtstrahl dann einen Schaltimpuls auslöst, wenn er reflektiert und vom eingebauten Empfangsteil in der Folge empfangen wird. Solche fotoelektrischen Reflexionsschalter werden im Handel angeboten, beispielsweise von der Firma Sick - Optik Elektronik. Diese Reflexionsschalter senden einen Lichtstrahl aus, und wenn dieser ausgesandte Lichtstrahl reflektiert wird und wieder auf den aussendenden Schalter trifft, wird dieser Schalter aktiviert.

Um die gegenseitige Beeinflussung der gegeneinander gerichteten fotoelektrischen Reflexionsschaltern zu vermeiden, sind sie gegeneinander etwas versetzt und/oder ihre optischen Wirkachsen schließen miteinander einen stumpfen Winkel ein.

Um diese doch empfindlichen Bauteile zu schützen, vor allem beim Transport der Einrichtung, ist vorgesehen, daß die fotoelektrischen Reflexionsschalter am Auflagetisch oder an einer Zuführeinrichtung für das Werkstück lösbar befestigt und/oder in im Auflagetisch vorgesehenen Ausnehmungen einklapp- oder einschwenkbar sind. Dadurch können diese fotoelektrischen Reflexionsschalter vom Auflagetisch oder von der Zuführeinrichtung für das Werkstück abgenommen werden oder in eine schützende Mulde im Auflagetisch eingeklappt werden, die eventuell durch einen Deckel verschließbar ist.

Zur Auslösung der fotoelektrischen Reflexionsschalter sind Reflektoren vorgesehen, die die Bedienungsperson auf dem Handrücken trägt. Solche Reflektoren können auch auf der Außenseite von Arbeitshandschuhen festgelegt sein. Reflektoren für diesen Zweck sind sehr biegsam und weich und können auch über ein Haftmittel am Handrücken festgelegt werden.

Die beiden fotoelektrischen Reflexionsschalter sind so randseitig am Auflagetisch oder an einer Zuführeinrichtung angeordnet, daß ihre gedachte Verbindungslinie etwa rechtwinkelig steht zur Arbeitsebene des Trenn- oder Spaltwerkzeuges. Handelt es sich bei der Arbeitsmaschine um eine Einrichtung zum Spalten von Brennholz mit einem linear bewegbaren, gegen einen Auflagetisch verfahrbaren Spaltkeil, so liegen diese Reflexionsschalter etwas oberhalb der Ebene des Auflagetisches, zweckmäßigerweise in der halben Höhe des vom Spaltkeil überfahrbaren Bereiches.

Ohne die Erfindung einzuschränken, wird ein Ausführungsbeispiel im Zusammenhang mit einer Einrichtung zum Spalten von Brennholz anhand der Zeichnung näher erläutert. Es zeigen:

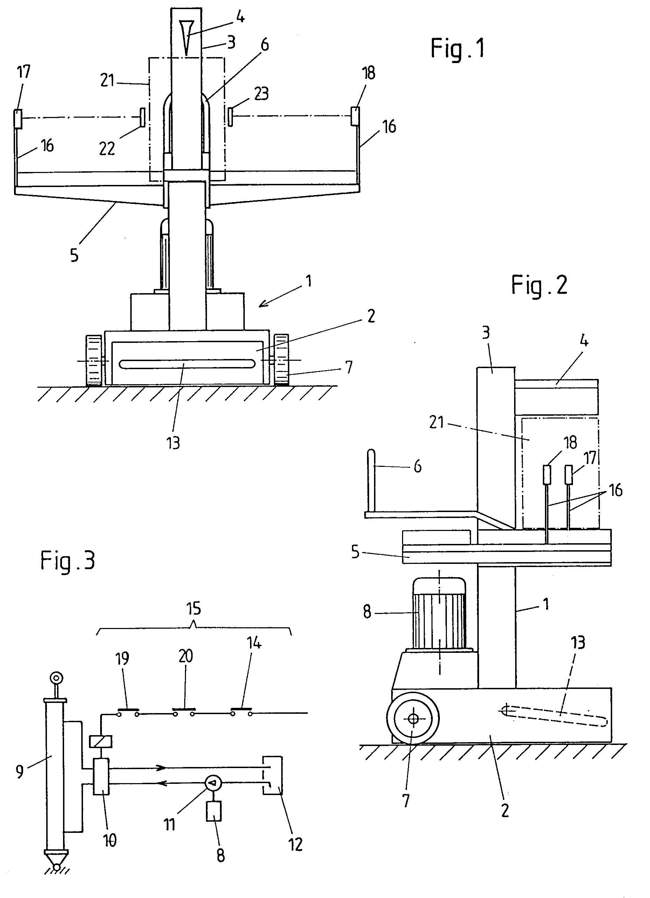

Fig. 1 eine Einrichtung zum Spalten von Brennholz von vorne, von der Bedienungsseite her; Fig. 2 von der Seite gesehen und Fig. 3 ist ein vereinfachtes Schaltschema.

Die Einrichtung zum Spalten von Brennholz besitzt ein Maschinengestell 1 mit einem Basisteil 2 und einem aufrechten Spaltturm 3 mit einem von diesem Spaltturm auskragenden Spaltkeil 4. Am Maschinengestell 1 ist ein Auflagetisch 5 auskragend befestigt. Ein bügelartiger Griff 6 an der Rückseite der Einrichtung dient in Verbindung mit den Rädern 7 zum Transport der Einrichtung über kurze Strecken. Innerhalb des Spaltturmes 3 ist eine doppelseitig beaufschlagbare hydraulische Kolben-Zylinder-Einheit 9 untergebracht, zu deren Betrieb ein Antriebsmotor 8 dient, ferner ein hydraulisches Steuerventil 10 sowie eine Ölpumpe 11 und ein Ölvorratsbehälter 12. Zwischen dem Ölvorratsbehälter 12 und dem hydraulischen Steuerventil 10 sind eine Druckleitung und eine Rücklaufleitung in üblicher Art vorgesehen. Über einen im Basisteil 2 untergebrachten Schaltbügel 13, der hier mit dem Fuß betätigbar ist, wird ein erster Schalter 14 im Steuerkreis 15 des hydraulischen Steuerventils 10 betätigt. Es gibt auch Einrichtungen dieser Art, bei welchen der Schaltbügel zur Betätigung des hydraulischen Steuerventiles mit dem Knie betätigt werden kann.

Seitlich des vom Spaltkeil 4 überfahrbaren Bereiches sind randseitig am Auflagetisch 5 über Halter 16 fotoelektrische Reflexionsschalter 17 und 18 festgelegt, die gegeneinander im gezeigten Ausführungsbeispiel etwas versetzt sind (Fig. 2) und die gegeneinander gerichtet sind. Diese fotoelektrischen Reflexionsschalter 17 und 18 liegen in Erregerkreisen von Relais, die hier nicht dargestellt sind, die jedoch ihrerseits Schaltkontakte 19 und 20 aufweisen, die in Serie im Steuerkreis 15 des hydraulischen Steuerventils 10 angeordnet sind. Die Höhe, in der die beiden Reflexionsschalter 17 und 18 oberhalb des Auflagetisches 5 liegen, entspricht etwa der halben Arbeitshöhe des Spaltkeiles 4. Anstelle des erwähnten seitlichen Versatzes können diese Reflexionsschalter 17 und 18 auch so angeordnet sein, daß die von ihnen ausgesandten Lichtstrahlen miteinander einen stumpfen Winkel einschließen.

Wird die vorstehend beschriebene Einrichtung bestimmungsgemäß benutzt, so trägt die Bedienungsperson an ihrem Handrücken Reflektoren 22 und 23 oder aber sie trägt Arbeitshandschuhe, an deren Außenseite solche Reflektoren 22 und 23 festgelegt sind. Solche Reflektoren sind weich und biegsam und tragen auf ihrer Rückseite eine Haftschichte, so daß sie an einer Unterlage festlegbar und von dieser wiederholt abnehmbar sind. Das zu spaltende Holzstück wird von der Bedienungsperson mit beiden Händen seitlich gefaßt und auf den Auflagetisch 5 gestellt. Ein solches Holzstück ist in Fig. 1 durch eine strichlierte Linie 21 angedeutet. Wird das Holzstück vorschriftsmäßig gehalten, so liegen die Hände der Bedienungsperson seitlich an diesem Holzstück an, wobei die erwähnten Reflektoren 22 und 23 jene Lage gegenüber dem Verschiebebereich des Spaltkeiles 4 einnehmen, die die Fig. 1 veranschaulicht. Der vom fotoelektrischen Reflexionsschalter 17 ausgesandte und von dem in richtiger Lage befindlichen Reflektor 22 zurückgewoffene Lichtstrahl löst einen Schaltimpuls aus, durch den der Schaltkontakt über ein hier nicht dargestelltes Relais geschlossen wird. Korrespondierendes gilt für den fotoelektrischen Reflexionsschalter 18 und den ihm zugeordneten Reflektor 23. Nun kann das Steuerventil 10 über den Schaltbügel 13 und den Schalter 14 geschlossen und dadurch der Spaltkeil 4 abgesenkt werden. Wären die die Reflektoren 22 und 23 tragenden Hände der Bedienungsperson nicht in der aus Fig. 1 ersichtlichen Lage relativ zum Holzstück, so würden die fotoelektrischen Reflexionsschalter 17 und/oder 18 nicht ansprechen und das Steuerventil 10 könnte nicht betätigt werden. Sobald die Reflektoren 22 und 23 oder wenigstens einer von den beiden aus dem optischen Wirkungsbereich der fotoelektrischen Reflexionsschalter genommen wird, wird der Steuerkreis bzw. Schaltkreis 15 für das hydraulische Steuerventil 10 unterbrochen und der Spaltkeil 4 kann nicht aktiviert werden. Da die von den fotoelektrischen Reflexionsschaltern 17 und 18 ausgesandten Lichtstrahlen relativ stark gebündelt sind, ist der Sicherheitsbereich eng einzugrenzen. In Fig. 1 sind diese Lichtstrahlen durch strichpunktierte Linien angedeutet.

Im gezeigten Ausführungsbeispiel sind im Steuerkreis 15 für das hydraulische Steuerventil 10 die Schalter 14 und die Schaltkontakte 19 und 20 in Serie angeordnet. Der über den Schaltbügel 13 willkürlich betätigbare Schalter 14 kann den Spaltkeil 4 nur dann aktivieren, wenn über die beiden fotoelektrischen Reflexionsschalter 17 und 18 auch die Schaltkontakte 19 und 20 geschlossen haben, was nur dann geschieht, wenn die Hände der Bedienungsperson mit den daran festgelegten Reflektoren 22 und 23 vorschriftsmäßig seitlich des Holzstückes und damit außerhalb des Gefahrenbereiches liegen.

Grundsätzlich ist es möglich, den willkürlich zu betätigenden Schalter 14 wegzulassen und in den Steuerkreis der fotoelektrischen Reflexionsschalter 17 und 18 ein elektronisches Verzögerungsglied einzubauen mit der Folge, daß die Kolben-Zylinder-Einheit 9 dann mit einer eventuell einstellbaren zeitlichen Verzögerung beaufschlagt wird, sobald die Bedienungsperson das zu spaltende Holzstück auf den Auflagetisch aufgelegt und ihre Hände mit den daran befestigten Reflektoren 22 und 23 in die in Fig. 1 gezeigte Position seitlich des Holzstückes gebracht hat.

Der Begriff Relais ist ganz allgemein zu verstehen. Es kann sich hier um ein mechanisches, elektrisch gesteuertes Schaltorgan handeln oder aber um ein auf elektronischer Basis arbeitendes Schalterorgan.

Dank der erfindungsgemäßen Maßnahme ist es unmöglich, den Spaltkeil 4 zu aktivieren, wenn nicht die Hände der Bedienungsperson in der aus Fig. 1 ersichtlichen Lage sich befinden, die durch die Reflektoren 22 und 23 angedeutet ist.

Die Schutzeinrichtung ist nicht auf die hier beispielsweise beschriebene Einrichtung zum Spalten von Brennholz beschränkt. Sie kann auch bei Kreissägen angewendet werden, bei Strohmühten, Häckslern o.dgl., wobei die Anordnung der Schutzeinrichtung entsprechend den jeweiligen Gegebenheiten anzupassen ist. Insbesondere bei sich schnell drehenden Werkzeugen (Kreissägen) wird außer der Beeinflussung des Steuerkreises für den Antrieb des Werkzeuges auch eine durch die Schutzeinrichtung aktivierbare Bremseinrichtung erforderlich sein.

### Legende zu den Hinweisziffern:

- 1: Maschinengestell
- 2: Basisteil
- 3: Spaltturm
- 4: Spaltkeil
- 5: Auflagetisch
- 6: Griff
- 7: Rad
- 8: Antriebsmotor
- 9: Kolben-Zylinder-Einheit
- 10: Steuerventil
- 11: Ölpumpe
- 12: Ölvorratsbehälter
- 13: Schaltbügel
- 14: Schalter
- 15: Steuerkreis
- 16: Halter
- 17: fotoelektrischer Reflexionsschalter
- 18: fotoelektrischer Reflexionsschalter
- 19: Schaltkontakt
- 20: Schaltkontakt
- 21: strichlierte Linie
- 22: Reflektor
- 23: Reflektor

## Patentansprüche

1. Schutzeinrichtung für und an Arbeitsmaschinen mit sich bewegenden Trenn-und/oder Spaltwerkzeugen wie beispielsweise Brennholzspalter, Kreissägen, Strohmühlen, Häcksler u.dgl. und einem Auflagetisch bzw. einer Zuführeinrichtung für das Werkstück, dadurch gekennzeichnet, daß seitlich oder vor dem sich bewegenden Trenn- und/oder Spaltwerkzeug vorzugsweise randseitig am Auflagetisch bzw. an der Zuführeinrichtung mindestens je ein fotoelektrischer Reflexionsschalter (17, 18) angeordnet ist, daß die fotoelektrischen Reflexionsschalter (17, 18) beider Seiten einander zugewandt sind, wobei jedem der fotoelektrischen Reflexionsschalter (17, 18) mindestens ein Relais zugeordnet ist und die Schaltkontakte (19, 20) dieser Relais in Reihe in einem Steuerkreis des Antriebes des Trenn- und/oder Spaltwerkzeuges angeordnet ist und daß zur Auslösung der fotoelektrischen Reflexionsschalter (17, 18) Reflektoren (22, 23) vorgesehen sind, die am Handrücken des die Arbeitsmaschine Benutzenden oder an der Außenseite von Arbeitshandschuhen angebracht sind.

2. Schutzeinrichtung nach Anspruch 1, dadurch gekennzeichnet, daß die fotoelektrischen Reflexionsschalter (17, 18) beider Seiten zur Vermeidung gegenseitiger Beeinflussung gegeneinander etwas versetzt sind und/oder ihre optischen Wirkachsen miteinander einen stumpfen Winkel einschließen.

3. Schutzeinrichtung nach Anspruch 1 oder 2, dadurch gekennzeichnet, daß die fotoelektrischen Reflexionsschalter (17, 18) am Auflagetisch (5) oder an einer Zuführeinrichtung lösbar befestigt und/oder in im Auflagetisch oder der Zuführeinrichtung vorgesehenen Ausnehmungen einklapp- oder einschwenkbar sind.

4. Schutzeinrichtung nach Anspruch 1, dadurch gekennzeichnet, daß die gedachte Verbindungslinie der beiden Reflexionsschalter (17, 18) annähernd rechtwinkelig steht zu der gedachten Arbeitsebene des Trennwerkzeuges.

5. Schutzeinrichtung nach einem der Ansprüche 1 bis 4, angeordnet an einer Einrichtung zum Spalten von Brennholz mit einem Auflagetisch (5) für das zu spaltende Holz und einem gegen den Auflagetisch (5) verfahrbaren Spaltkeil (4), der mittels einer hydraulischen Kolben-Zylinder-Einheit (9) verschiebbar ist, zu deren Beaufschlagung eine motorisch antreibbare Ölpumpe (11), ein hydraulisches Steuerventil (10) und zumindest ein das Steuerventil betätigender Schalter (14) vorgesehen ist, dadurch gekennzeichnet, daß seitlich des vom Spaltkeil (4) überfahrbaren Bereiches und vorzugsweise randseitig am Auflagetisch (5) mindestens je ein fotoelektrischer Reflexionsschalter (17, 18) angeordnet ist, daß die fotoelektrischen Reflexionsschalter (17, 18) einander zugewandt sind, wobei jedem der fotoelektrischen Reflexionsschalter (17, 18) mindestens ein Relais zugeordnet ist und die Schaltkontakte (19, 20) dieser Relais in Reihe in einem das hydraulische Steuerventil (10) betätigenden Steuerkreis (15) angeordnet sind.

6. Schutzeinrichtung nach Anspruch 5, dadurch gekennzeichnet, daß die Reflexionsschalter (17, 18) etwa in der halben Höhe des vom Spaltkeil (4) überfahrbaren Bereiches angeordnet sind.

7. Schutzeinrichtung nach einem der Ansprüche 1 bis 6, dadurch gekennzeichnet, daß seitlich oder vor dem sich bewegenden Trenn- und/oder Spaltwerkzeug je ein fotoelektrischer Reflexionsschalter (17, 18) angeordnet ist.

## Claims

1. A safety device for and on machines with moving cutting and/or splitting tools such as, for example, firewood splitters, circular saws, straw grinders, chaff choppers and the like, and a supporting table or a feed device for the tool, characterised in that at least one photoelectric reflection switch (17, 18) is located on either side of or in front of the moving cutting and/or splitting tool, preferably on the edge of the supporting table or the feed device, in that the photoelectric reflection switches (17, 18) on either side are directed towards one another, at least one relay being associated with each of the photoelectric reflection switches (17, 18) and the switch contacts (19, 20) of these relays being arranged in series in a control circuit of the drive mechanism of the cutting and/or splitting tool, and in that, in order to trigger the photoelectric reflection switches (17, 18), reflectors (22, 23) are provided which are attached to the back of the hand of the person using the machine or to the outside of working gloves.

2. A safety device according to claim 1, characterised in that the photoelectric reflection switches (17, 18) on either side, in order to avoid affecting one another, are slightly mutually offset and/or their effective optical axes enclose an obtuse angle with one another.

3. A safety device according to claim 1 or 2, characterised in that the photoelectric reflection switches (17, 18) are detachably secured to the supporting table (5) or to a feed device and/or may be folded or pivoted into recesses provided in the supporting table or the feed device.

4. A safety device according to claim 1, characterised in that the imaginary line connecting the two reflection switches (17, 18) is approximately at right angles to the imaginary working plane of the cutting tool.

5. A safety device according to one of claims 1 to 4 arranged on a device for splitting firewood with a supporting table (5) for the wood to be split and a splitting wedge (4), movable towards the supporting table (5), which is displaceable by means of a hydraulic piston-cylinder unit (9), for acting upon which there are provided a motor-drivable oil pump (11), a hydraulic control valve (10) and at least one switch (14) actuating the control valve, characterised in that at least one photoelectric reflection switch (17, 18) is located on either side of the region over which the splitting wedge (4) travels and preferably on the edge of the supporting table (5), in that the photoelectric reflection switches (17, 18) are directed towards one another, at least one relay being associated with each of the photoelectric reflection switches (17, 18) and the switch contacts (19, 20) of these relays being arranged in series in a control circuit (15) actuating the hydraulic control valve (10).

6. A safety device according to claim 5, characterised in that the reflection switches (17, 18) are located approximately half way up the region over which the splitting wedge (4) travels.

7. A safety device according to one of claims 1 to 6, characterised in that one photoelectric switch (17, 18) is located on either side of or in front of the moving cutting and/or splitting tool.

## Revendications

1. Installation de protection applicable à des machines comportant des outils mobiles pour couper et/ou diviser, comme par exemple des fendeurs de bois, des scies circulaires, des broyeurs de paille, des hacheurs ou machines analogues, ainsi qu'un plateau de réception ou une installation d'alimentation pour le produit,
caractérisée en ce qu'
• à côté ou devant l'outil de coupe et/ou de division, mobile, de préférence au niveau du bord du plateau ou de l'installation d'alimentation, il est prévu au moins un interrupteur à réflexion photoélectrique (17, 18),
• cet interrupteur à réflexion photoélectrique (17, 18) étant tourné vers les deux côtés, et à chaque interrupteur à réflexion photoélectrique (17, 18) est associé au moins un relais, les contacts de commutation (19, 20) de ce relais étant en série dans le circuit de l'entraînement de l'outil pour couper et/ou fendre, et
• des réflecteur (22, 23) assurent le déclenchement de l'interrupteur à réflexion photoélectrique (17, 18), ces réflecteurs étant prévus sur le dos des mains de l'opérateur de la machine ou sur le côté extérieur de ses gants de travail.

2. Installation de protection selon la revendication 1,
caractérisée en ce que
• les interrupteurs à réflexion photoélectrique (17, 18) sont sensiblement décalés des deux côtés pour éviter de s'influencer réciproquement et/ou
• leurs axes optiques forment entre eux un angle obtus.

3. Installation de protection selon la revendication 1 ou 2,
caractérisée en ce que
l'interrupteur à réflexion photoélectrique (17, 18) est fixé de manière amovible sur le plateau (5) ou sur une installation d'alimentation et/ou, de manière basculante dans le sens de l'escamotage, dans des cavités prévues sur le plateau ou l'installation d'alimentation.

4. Installation de protection selon la revendication 1,
caractérisée en ce que
la ligne géométrique reliant les deux interrupteurs à réflexion (17, 18) est sensiblement perpendiculaire au plan de travail géométrique de l'outil de fente.

5. Installation de protection selon l'une des revendications 1 à 4, montée dans une installation pour fendre du bois de chauffage, comprenant un plateau (5) pour recevoir le bois à fendre et un coin (4), mobile par rapport au plateau (5), qui est commandé par un vérin hydraulique (9) et dont la mise en oeuvre comporte une pompe hydraulique (11) entraînée par un moteur, une vanne de commande hydraulique (10) et au moins un interrupteur (14) actionnant la vanne de commande,
caractérisée en ce qu'
à côté de la zone que peut parcourir le coin de fente (4), et de préférence au bord du plateau (5), il est prévu au moins un interrupteur à réflexion photoélectrique (17, 18), les interrupteurs à réflexion photoélectrique (17, 18) étant tournés les uns vers les autres et à chacun des interrupteurs à réflexion photoélectrique (17, 18) est associé au moins un relais, les contacts de commutation (19, 20) de ces relais étant montés en série dans un circuit de commande (15) actionné par la vanne de commande hydraulique (10).

6. Installation de protection selon la revendication 5,
caractérisée en ce que
les interrupteurs à réflexion (17, 18) sont prévus sensiblement à mi-hauteur de la zone parcourue par le coin de fente (4).

7. Installation de protection selon l'une quelconque des revendications 1 à 6,
caractérisée en ce qu'
à côté ou en avant de l'outil de coupe et/ou de fente, mobile, il est prévu chaque fois un interrupteur à réflexion photoélectrique (17, 18).
